# EUROPÄISCHE PATENTSCHRIFT

(11) **EP 2 804 839 B1**
(45) Veröffentlichungstag und Bekanntmachung des Hinweises auf die Patenterteilung: **20.04.2016**
(21) Anmeldenummer: 13700567.4
(22) Anmeldetag: 17.01.2013
(51) Int. Cl.: C03B 37/012, C03B 37/014

(54) **QUARZGLASROHR ALS HALBZEUG FÜR EIN OPTISCHES BAUTEIL SOWIE VERFAHREN ZUR HERSTELLUNG DES QUARZGLASROHRES**
QUARTZ GLASS TUBE AS PREFORM FOR AN OPTICAL PART AS WELL AS PROCESS FOR MAKING THE QUARTZ GLASS TUBE
TUBE EN VERRE DE SILICE COMME PRÉFORME POUR UNE PIECE OPTIQUE AINSI QU'UN PROCÉDÉ DE FABRICATION DE LA TUBE EN VERRE DE SILICE

(30) Priorität: 17.01.2012 DE 102012000670
(43) Veröffentlichungstag der Anmeldung: 26.11.2014
(73) Patentinhaber: Heraeus Quarzglas GmbH & Co. KG, 63450 Hanau (DE)
(72) Erfinder: SCHÖTZ, Gerhard, 63741 Aschaffenburg (DE); BRÄUER, Karsten, 63486 Bruchköbel (DE); SCHMIDT, Richard, 63546 Hammersbach (DE); BAUER, Peter, 63500 Seligenstadt (DE); SCHULTHEIS, Andreas, 63505 Langenselbold (DE); SCHMITT, Clemens, 63825 Blankenbach (DE); LANGNER, Andreas, 63579 Freigericht (DE)
(74) Vertreter: Staudt, Armin Walter
(86) Internationale Anmeldenummer: PCT/EP2013/050776
(87) Internationale Veröffentlichungsnummer: WO 2013/107787

(56) Entgegenhaltungen:
- EP-A1- 2 337 166
- WO-A1-02/059660
- WO-A2-2005/082801
- JP-A- 2003 020 241
- US-A1- 2003 031 444
- US-A1- 2006 088 261

## Beschreibung

Die vorliegende Erfindung betrifft ein Quarzglasrohr als Halbzeug für ein optisches Bauteil, das eine sich entlang einer Rohr-Mittelachse erstreckende Innenbohrung zur Aufnahme eines Kernstabs und eine von einer Innenmantelfläche und einer Außenmantelfläche begrenzte Rohrwandung aufweist, in der ein innerer Bereich aus einem ersten Quarzglas und ein den inneren Bereich umgebender äußerer Bereich aus einem zweiten Quarzglas an einer Kontaktfläche aneinander liegen, die um die Mittelachse verläuft, wobei sich die Brechungsindizes von ersten und zweitem Quarzglas unterscheiden.

Außerdem geht es in der Erfindung um ein Verfahren zur Herstellung eines derartigen Quarzglasrohres.

### Stand der Technik

In der EP 1 000 909 A1 wird ein Substratrohr aus Quarzglas vorgeschlagen, das über seine Wandung einen nicht homogenen Verlauf der Brechzahl aufweist. Um dies zu erreichen, wird eine der Innenbohrung des Substratrohres zugewandte Innenschicht mit Germaniumoxid dotiert und dadurch gegenüber undotiertem Quarzglas eine Brechzahlerhöhung bewirkt. Die daran angrenzende Außenschicht hat einen vergleichsweise niedrigeren Brechungsindex.

Das Substratrohr dient zur Herstellung von Standard-Vorformen für optische Fasern nach dem sogenannten MCVD-Innenabscheideverfahren (Modified Chemical Vapor Deposition). Die dotierte Innenschicht des Substratrohres kann dabei einen Teil des ansonsten aufwändig durch Innenascheidung zu erzeugenden Glasmaterials ersetzen, was den Herstellungsprozess für die Vorform verbilligt.

Häufig wird das Kernglas einer optischen Vorform jedoch als sogenannter Kernstab bereitgestellt, der anhand eines Stab-in-Rohr -Verfahrens mit zusätzlichem Mantelmaterial umfangen wird. Dieses Mantelmaterial liegt gegebenenfalls in Rohrform vor und bildet ein Halbzeug im Sinne der vorliegenden Erfindung.

Ein derartiges gattungsgemäßes Quarzglasrohr als Halbzeug zum Umfangen eines Kernstabs ist bekannt aus der WO 2010/003856 A1. Bei diesem Quarzglasrohr ist eine kreisrunde Innenbohrung von einer Rohrwandung umgeben, e sich aus drei Schichten zusammensetzt, nämlich aus einer Innenschicht aus Quarzglas, einer die Innenschicht umgebenden Ringzonenschicht aus mit Fluor dotiertem Quarzglas mit einem vergleichsweise niedrigen Brechungsindex, und mit einer die Ringzonenschicht umgebenden Außenschicht.

Diese Ausgestaltung der Wandung des Mantelbereichs erweist sich für die Herstellung einer optischen Faser mit geringer Biegeempfindlichkeit als hilfreich. Die vorliegende Erfindung betrifft jedoch weniger optische Standardfasern, sondern laseraktive Spezialfasern oder Bauteile. Eine oder mehrere laseraktive Kernzonen sind von einem Mantelbereich umgeben, der zur Lichtführung und zum sogenannten "optischen Pumpen" dient. Dabei wird Laserlicht in die Kernzone eingekoppelt und regt dort vorhandene laseraktive Ionen an. Von den angeregten Ionen nimmt ein die Kernzone durchlaufender Lichtpuls zusätzlich Energie auf und wird dadurch verstärkt, oder die laseraktiven Substanzen werden durch das eingekoppelte Pumplicht selbst zur Abgabe von Laserlicht angeregt.

Häufig sind auch derartige optische Bauteile mit mehreren Mantelschichten ausgestattet, wobei die Querschnittsfläche mindestens einer Mantelschicht von der Kreisform abweicht. Diese Abweichung bewirkt im optischen Bauteil eine Veränderung der Lichtführung innerhalb der Pumplichtzone. Insbesondere werden dadurch Lichtmoden (so genannte Helixmoden) behindert und verändert, die ansonsten die Kernzone umlaufen, ohne eingekoppelt werden zu können. Die Symmetrieänderung im Mantelbereich trägt so zu einem effektiveren Einkoppeln des Pumplichts in die Kernzone bei.

Eine optische Faser dieser Art ist beispielsweise aus der US 2003/0031444 A1 bekannt. Ein Kernbereich aus laseraktivem Quarzglas ist umgeben von einer inneren Mantelglasschicht aus Quarzglas mit einem niedrigeren Brechungsindex als der Kernbereich, und diese ist wiederum von einer äußeren Mantelglasschicht aus Quarzglas umgeben, deren Brechungsindex geringer ist als derjenige der inneren Mantelglasschicht. Beide Mantelglasschichten sind im radialen Querschnitt oktogonal, der Kernbereich ist kreisrund.

Die Faser wird aus einer Vorform gezogen, für deren Herstellung zwei Methoden angegeben werden. Beiden Methoden gemeinsam ist die Bereitstellung eines üblichen, kreisrunden Kernstabs, der die Kernzone und eine diese umhüllende innere Mantelglasschicht aufweist. Der Kernstab wird abgeschliffen, so dass die innere Mantelglasschicht eine oktogonale Außengeometrie erhält. Die äußere Mantelglasschicht wird anschließend mittels eines Plasma-Außenabscheideverfahrens (POD-Verfahren, Plasma Outside Deposition) oder durch Aufkollabieren eines separat erzeugten Mantelrohres aufgebracht.

### Technische Aufgabe

Das Quarzglas des Kernstabs genügt in der Regel besonders hohen Anforderungen an Reinheit und optische Qualität, so dass der Kernstab einen wesentlichen Kostenfaktor bei der Vorformherstellung darstellt. Beim Abschleifen der inneren Mantelglasschicht kann es bei dem bekannten Verfahren zu einem Totalverlust des Kernstabs kommen.

Beim Abscheiden der äußeren Mantelglasschicht mittels POD-Verfahren ergibt sich ein weiteres Problem. Prozessbedingt entsteht hierbei energiereiche UV-Strahlung, die UV-empfindliche Kernmaterialien schädigen kann.

Der Erfindung liegt die Aufgabe zugrunde, ein Quarzglasrohr bereitzustellen, das insbesondere die Herstellung optischer Bauteile für Spezialanwendungen, wie laseraktive optische Bauteile in Stab- oder Faserform erleichtert. Weiterhin liegt der Erfindung ein kostengünstiges Verfahren zur Herstellung eines derartigen Quarzglasrohres anzugeben.

### Allgemeine Beschreibung der Erfindung

Hinsichtlich des Quarzglasrohres wird diese Aufgabe ausgehend von einem Quarzglasrohr der eingangs genannten Gattung erfindungsgemäß dadurch gelöst, dass die Kontaktfläche im radialen Querschnitt einen nicht-runden Verlauf und die Innenmantelfläche einen kreisrunden Verlauf zeigen.

Das erfindungsgemäße rohrförmige Quarzglasrohr stellt einerseits eine kreisrunde Innenbohrung und andererseits einen inhomogenen Brechzahlverlauf über die Rohrwandung bereit, wobei mindestens eine Kontaktfläche zwischen den Bereichen unterschiedlicher Brechungsindizes innerhalb der Rohrwandung umläuft, die sich von dem eingangs beschriebenen, bekannten Quarzglasrohr dadurch unterscheidet dass sie nicht kreisrund ist.

Dieses Quarzglasrohr wird im Folgenden auch als "Mantelrohr mit nicht-runder Kontaktfläche" bezeichnet. Es ist grundsätzlich im MCVD- oder anderen Innenabscheidungsverfahren als Substratrohr einsetzbar, es ist jedoch besonders geeignet und dafür ausgelegt, zum Überfangen mindestens einer weiteren Quarzglas-Komponente, wie etwa einem Rohr oder einem Kernstab.

Bei einem Kernstab kann es sich um einen Stab aus einem laseraktiven Glas handeln, bei dem ein zentraler Kernglasbereich von einem Mantelbereich umgeben ist, von dem mindestens ein Teil in Form des Quarzglasrohres bereitgestellt wird.
- Beim Einsatz für ein MCVD-Verfahren oder ein vergleichbares Innenabscheideverfahren erleichtert die kreisrunde Innenbohrung eine definierte Schicht-Ausbildung.
- Bei einem Einsatz zum Überfangen wird in die kreisrunde Innenbohrung eine andere Quarzglas-Komponente mit rundem Außenumfang eingesetzt, wie etwa dem im Querschnitt kreisrunden Kernstab oder einem Rundrohr. Zwischen den Komponenten verbleibt ein ringförmiger Spalt. Das Quarzglasrohr wird auf die weitere Quarzglas-Komponente aufkollabiert und mit dieser verschmolzen. Dabei erleichtert der ringförmige Spalt das Kollabieren und Verschmelzen im Vergleich zu anderen Spaltgeometrien.
- Besonders wichtig ist, dass der nicht-runde Verlauf der Kontaktfläche innerhalb der Rohrwandung bereits fest vorgegeben ist. Denn dadurch entfällt das im Stand der Technik zwecks Erzeugung der nicht-runden Struktur notwendige Abschleifen des Mantels bei direkter Verbindung mit dem Kernstab. Bei der Erfindung werden die Zwischenprodukte "Kernstab" und "Mantelrohr mit nicht-runder Kontaktfläche" separat erzeugt und fertiggestellt und erst zuletzt - beim Überfangen - beide Zwischenprodukte zur Vorform zusammengeführt. Dadurch wird die Anzahl der Prozessschritte reduziert, bei denen der Kernstab involviert ist, so dass sich die Gefahr einer Beschädigung des Kernstabs verringert.

Die Abweichung der Kontaktfläche von der Kreisform bricht die Rotationsymmetrie um die Rohr-Mittelachse und bewirkt dadurch im optischen Bauteil eine Veränderung der Lichtführung innerhalb des Mantelbereichs. Insbesondere werden dadurch Lichtmoden (so genannte Helixmoden) behindert und geändert, die ansonsten die Kernzone umlaufen und nicht ohne weiteres in die Kernzone eingekoppelt werden können. Dies führt so zu einer effektiveren Einkopplung des Pumplichtes in die Kernzone und damit zu einer Erhöhung der Pump-Effizienz.

Der "innere Bereich" des Mantelrohres grenzt unmittelbar an die kreisrunde Innenbohrung an, oder er ist innerhalb der Rohrwandung weiter nach außen versetzt, also nach Innen von einem anderen Quarzglas mit anderem Brechungsindex begrenzt. In jedem Fall ist er von dem "äußeren Bereich" unmittelbar umgeben. Der "äußeren Bereich" wiederum grenzt an die Außenmantelfläche an, oder er ist innerhalb der Rohrwandung weiter nach Innen versetzt, also unmittelbar von weiterem Mantelmaterial mit anderem Brechungsindex umgeben.

Das Quarzglasrohr ist insbesondere zur Herstellung von Vorformen für laseraktive Fasern geeignet, die aus dem oben genannten Grund einen in Bezug auf die Bauteil-Mittelachse nicht rotationssymmetrischen Mantelbereich haben sollen. Es kann gleichzeitig mit mehreren Kernstäben bestückt werden, was die Produktivität verbessert. Es hat aber auch Vorteile für andere Anwendungen, wie etwa für Testzwecke; sollen unterschiedliche Kernstäbe getestet oder qualifiziert werden, so muss nach der bekannten Methode für jeden Kernstab aufwendig eine Vorform produziert werden. Im Gegensatz dazu ermöglicht der Einsatz eines Mantelrohres mit nicht-runder Kontaktfläche das gleichzeitige Überfangen unterschiedlicher Kernstäbe in einem Rohr.

Der Innendurchmesser des Quarzglasrohres liegt im Bereich einiger Millimeter, typischerweise im Bereich von 5 mm bis 20 mm, und die Stärke der Rohrwandung beträgt mindestens 1 mm. Der Außendurchmesser des Quarzglasrohres beträgt mehr als 2,5 mm, vorzugsweise mehr als 7,5 mm und er liegt typischerweise im Bereich von 20 bis 30 mm.

Wie oben bereits erläutert, hat der nicht-runde Verlauf der Kontaktfläche die Wirkung, dass er die Rotationssymmetrie um die Mittelachse des Quarzglasrohres bricht. Eine besonders wirksame Brechung der Rotationssymmetrie wird erreicht, wenn der Verlauf der Kontaktfläche im radialen Querschnitt mindestens eine Ecke aufweist.

Unter einer "Ecke" wird dabei eine Unstetigkeit im radialen Umlauf der Kontaktzone in makroskopischer Sicht verstanden; der Eckepunkt kann abgerundet sein. Ein idealer Eckpunkt, in dem Sinne, dass dort zwei Begrenzungslinien zweier Seiten in einem Winkel ohne jede Abrundung aufeinandertreffen ist technologisch schwierig zu erzeugen und er ist zur Erreichung des gewünschten Effektes auch nicht notwendig. Auch ein oder mehrere abgerundete Eckpunkte erfüllen diesen Zweck.

Im einfachsten Fall zeigt die Kontaktfläche im radialen Querschnitt einen polygonalen Verlauf.

Der polygonale Verlauf der Kontaktfläche, mit beispielsweise im Querschnitt hexagonaler oder oktogonaler Form, ist durch mechanische Bearbeitung eines Ausgangskörpers aus Quarzglas oder durch Heißformung einer erweichten Quarzglasmasse mittels Formen oder Ziehdüsen verhältnismäßig einfach herstellbar.

Es ist nicht erforderlich und in der Praxis häufig auch nicht ohne großen Aufwand erreichbar, eine ideale polygonale Geometrie einzustellen. beispielsweise sind Verrundungen der Ecken des Polygons unschädlich.

Alternativ dazu zeigt die Kontaktfläche im radialen Querschnitt einen Verlauf mit abwechselnd geraden und gekrümmten Längenabschnitten oder mit abwechselnd links und rechts gekrümmten Längenabschnitten.

Dies ist eine in Bezug auf die Vermeidung von Helixmoden besonders wirksame Geometrieänderung gegenüber einer einfachen Kreisform. Die Innenmantelfläche weist dabei an einer Seite oder an mehreren (vorzugsweise gegenüberliegenden) Seiten plane Flächen oder leicht nach innen (konkav) gekrümmte Flächen auf, so dass eine oder mehrere Abflachungen der Kreisform erzeugt werden. Die Ausführungsform mit einer Abflachung wird in der Literatur auch als "D-Form" bezeichnet, diejenige mit zwei oder vier gegenüberliegenden Abflachungen auch als "Doppel-D-Form" beziehungsweise als "Vierfach-D-Form".

Eine besonders wirksame Vermeidung von Helixmoden wird durch eine Ausführungsform erreicht, bei der die Kontaktfläche zwischen innerem und äußerem Bereich eine erste Kontaktfläche ist, die innerhalb der Rohrwandung von einer zweiten Kontaktfläche umgeben ist, wobei auch die zweite Kontaktfläche Bereiche aus Quarzglas mit unterschiedlichen Brechungsindizes begrenzt und einen im radialen Querschnitt nicht-kreisrunden Verlauf aufweist.

Es hat sich bewährt, wenn die Außenmantelfläche einen kreisrunden Verlauf zeigt.

Die kreisrunde Außenmantelfläche des Quarzglasrohrs erleichtert seine Weiterverarbeitung zu dem optischen Bauteil.

Das Quarzglasrohr kann eine oder mehrere exzentrisch angeordnete Innenbohrungen aufweisen, die mit einem laseraktiven Kernglas gefüllt werden. Bei einem Einsatz des daraus hergestellten optischen Bauteils als Laser hat die exzentrische Anordnung der Kernzone Vorteile bei der Einkopplung von Pumplicht. Denn dadurch wird die Kernzone in einen Bereich des Bauteils verlagert, in der sie weniger von dem stirnseitig eingestrahlten Pumplicht getroffen wird. Dies reduziert die Absorption des Pumplichts im Bereich der Einkoppelfläche. Darüber hinaus lässt sich eine exzentrische Anordnung der Kernzone auch leichter von außen kühlen.

Problematisch bei der exzentrischen Anordnung der Innenbohrung erweist sich ist jedoch die Strahlführung und insbesondere die Auskopplung der Laserstrahlung.

Diese Nachteile vermeidet somit eine bevorzugte Ausführungsform des Quarzglasrohrs, bei der die Innenbohrung konzentrisch zur Mittelachse verläuft.

Es hat sich als günstig erwiesen, wenn das Quarzglas des äußeren Bereichs mit Fluor dotiert ist.

Fluor lässt sich auch in hohen Konzentrationen bis zu 9 Gew.-%, vorzugsweise im Bereich zwischen 1 bis 5 Gew.-%, vergleichsweise einfach und homogen in Quarzglas einbringen. Bekanntlich bewirkt die Dotierung von Quarzglas mit Fluor sowohl eine Verringerung des Brechungsindex als auch eine Herabsetzung der Viskosität. Durch die Verringerung des Brechungsindex leistet das Quarzglas des äußeren Bereichs einen Beitrag zur Lichtführung.

In dem Zusammenhang erweist es sich auch als vorteilhaft, wenn der innere Bereich aus undotiertem Quarzglas besteht.

Bei einer bevorzugten Ausführungsform des Quarzglasrohrs ist vorgesehen, dass die Rohrwandung eine Innenschicht aufweist, die sich zwischen Innenbohrung und inneren Bereich erstreckt, und die aus Quarzglas besteht, das einen höheren Brechungsindex als undotiertes Quarzglas aufweist.

Der höhere Brechungsindex der Innenschicht wird durch Dotierung des Quarzglases mit einem oder mehreren Dotierstoffen wie etwa Germanium, Lanthan, Cer, Aluminium erreicht. Dadurch kann der Brechungsindex der Innenschicht an den des Kernstabs angepasst werden. Das radiale Brechzahlprofil weist in dem Fall einen an den Kernstabbereich angrenzenden Sockel mit erhöhtem Brechungsindex auf, was als "Pedestal-Design" bezeichnet wird.

Hinsichtlich des Verfahrens zur kostengünstigen Herstellung des erfindungsgemäßen Quarzglasrohrs wird die oben genannte Aufgabe erfindungsgemäß dadurch gelöst, dass ein Mutterrohr aus Quarzglas erzeugt wird, das eine Rohrwandung hat, innerhalb der ein innerer Bereich aus einem ersten Quarzglas und ein diesen umgebender äußerer Bereich aus einem zweiten Quarzglas an einer radial umlaufenden, im Querschnitt nicht kreisrunden Kontaktfläche aneinander liegen, wobei sich die Brechungsindizes von ersten und zweitem Quarzglas unterscheiden, und wobei das Mutterrohr zu einem Quarzglasrohr-Strang werkzeugfrei elongiert und daraus Teilstücke abgelängt werden.

Beim erfindungsgemäßen Verfahren wird zunächst ein Mutterrohr bereitgestellt, in dessen Wandung mindestens zwei Mantelbereiche aus Quarzglas mit unterschiedlichen Brechungsindizes vorgesehen sind, die miteinander eine nicht kreisrunde und die Rohr-Längsachse umlaufende Kontaktfläche haben. Der Mantelbereich ist in diesem Sinne mit einer nicht-runden Kontaktfläche versehen.

In einem Elongierprozess wird aus dem dickwandigen Mutterrrohr das oben erläuterte Quarzglasrohr erzeugt. Die Gesamtlänge der so erhaltenen rohrförmigen Quarzglasrohre ist um ein Vielfaches größer als diejenige des anfänglichen Mutterrohres, ohne dass zusätzliche Beschichtungs- oder Bearbeitungsvorgänge erforderlich sind. Somit können unter Einsatz des so erzeugten Quarzglasrohrs optische Bauteile wie Vorformen und optische Fasern besonders kostengünstig hergestellt werden, indem die Fertigungskosten des Mutterrohres auf mehrere Bauteile verteilt und somit die Gesamtkosten pro Bauteil reduziert werden.

Bei einer bevorzugten Verfahrensvariante, bei der die Innenbohrung des resultierenden rohrförmigen Quarzglasrohrs werkzeugfrei geformt wird, stellt sich eine durch Heißverformung geglättete Innenoberfläche mit besonders hoher Oberflächengüte ein.

Vorzugsweise wird beim Elongierprozess ein Ausziehverhältnis im Bereich von 3 bis 100, besonders bevorzugt weniger als 40 eingestellt.

Je größer das Ausziehverhältnis ist (das Verhältnis der Rohrlängen nach und vor Elongierprozess), umso geringer ist der auf die Gesamtlänge der erhaltenen Quarzglasrohre bezogene Aufwand für die Fertigung des Mutterrohres. Bei Ausziehverhältnissen unterhalb der genannten Untergrenze ergibt sich diesbezüglich kein nennenswerter Effekt mehr. Bei Ausziehverhältnissen oberhalb der genannten Obergrenze müssen besonders großvolumige Mutterohre elongiert werden, was die Handhabbarkeit beim Elongierprozess erschwert.

Es hat sich als günstig erwiesen, wenn die Innenbohrung des Mutterohres beim Elongierprozess mit einem Spülgas gespült wird.

Dies wirkt einem Eindringen von Verunreinigungen in die Innenbohrung des Quarzglasrohres und einer Verschlechterung der Oberflächenqualität der Rohrwandung entgegen.

### Ausführungsbeispiel

Nachfolgend wird die Erfindung anhand von Ausführungsbeispielen und einer Zeichnung näher erläutert. Im Einzelnen zeigt in schematischer Darstellung:
- **Fig. 1**: eine erste Ausführungsform eines Mantelrohres mit nicht-runder Kontaktfläche mit runder Außenmantelfläche in einem radialen Querschnitt,
- **Fig. 2**: eine zweite Ausführungsform eines Mantelrohres mit nicht-runder Kontaktfläche mit polygonaler Außenmantelfläche,
- **Fig. 3**: eine dritte Ausführungsform eines Mantelrohres mit nicht-runder Kontaktfläche, die nicht konzentrisch um die Innenbohrung verläuft,
- **Fig. 4**: eine vierte Ausführungsform eines Mantelrohres mit nicht-runder Kontaktfläche mit einer vierfach-D-förmigen Querschnittsgeometrie im Mantelbereich,
- **Fig. 5**: eine fünfte Ausführungsform eines Mantelrohres mit nicht-runder Kontaktfläche mit seitlich zur Mittelachse versetzten Zusatzbohrungen,
- **Fig. 6**: eine sechste Ausführungsform eines Mantelrohres mit nicht-runder Kontaktfläche mit mehreren um die zentrale Innenbohrung verteilten Zusatzbohrungen,
- **Fig. 7**: eine siebte Ausführungsform eines Mantelrohres mit nicht-runder Kontaktfläche mit zwei konzentrischen Kontaktflächen,
- **Fig. 8**: eine achte Ausführungsform eines Mantelrohres mit nicht-runder Kontaktfläche und einem Brechzahlprofil mit sogenanntem "Pedestal-Design",
- **Fig. 9**: eine unter Einsatz des Quarzglasrohrs gemäß Fig. 1 hergestellte Vorform für eine Laserfaser mit einer rechteckigen Kernzone, im radialen Querschnitt,
- **Fig. 10**: ein Fließdiagramm mit Verfahrensschritten zur Herstellung einer Vorform gemäß dem Stand der Technik, und
- **Fig. 11**: ein Fließdiagramm mit Verfahrensschritten zur Herstellung einer Vorform gemäß der Erfindung.

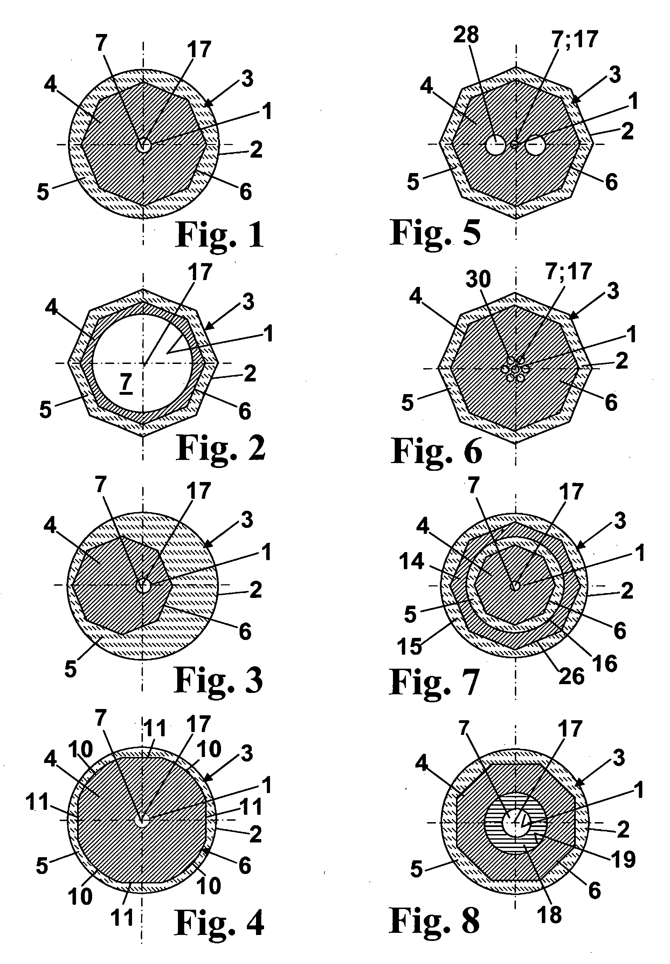

Bei dem in **Figur 1** schematisch dargestellten Quarzglasrohr begrenzen eine im Querschnitt kreisrunde Innenmantelfläche 1 und eine ebenfalls kreisrunde Außenmantelfläche 2 eine Rohrwand 3, die sich aus einem inneren Mantelbereich 4 und einem äußeren Mantelbereich 5 zusammensetzt. Die Innenbohrung trägt die Bezugsziffer 7. Die Kontaktfläche 6 zwischen innerem und äußerem Mantelbereich ist im radialen Querschnitt oktogonal. Die Mantelstruktur des Quarzglasrohres weist eine achtzählige Symmetrie in Bezug auf eine Drehung um die Mittelachse 17 auf, die sich koaxial zur Innenbohrung 7 erstreckt.

Sofern in Figuren 2 bis 9 identische Bezugsziffern verwendet werden wie in Figur 1, so sind damit gleiche oder äquivalente Bauteile und Bestandteile des Mantelrohres bezeichnet wie in Figur 1.

Auch die Ausführungsform von **Figur 2** zeigt eine oktogonale Kontaktfläche 6 zwischen innerem Mantelbereich 4 und äußerem Mantelbereich 5. Hierbei handelt es sich um ein besonders dünnwandiges Rohr mit ebenfalls achtzähliger Symmetrie der Mantelstruktur. Im Unterschied zur Ausführungsform von Figur 1 ist die Außenmantelfläche 8 jedoch ebenfalls oktogonal ausgeführt, so dass der äußere Mantelbereich 5 sowohl in Längsachsenrichtung als auch in radialer Richtung gesehen eine näherungsweise konstante Dicke hat.

Die wesentliche Besonderheit bei der Ausführungsform von **Figur 3** gegenüber derjenigen von Figur 1 liegt darin, dass der innere, ebenfalls oktogonal ausgeführte, Mantelbereich 4 einen seitlich zur Innenbohrung 7 versetzten Schwerpunkt hat. Die Kontaktfläche 6 verläuft parallel zur Mittelachse 17 aber nicht koaxial dazu. Diese Mantelstruktur zeigt hier nur noch Spiegelsymmetrie um eine durch die Mittelachse 17 verlaufende Spiegelebene. Die Breite des äußeren Mantelbereichs 5 variiert in radialer Richtung gesehen.

**Figur 4** zeigt schematisch eine andere von der Kreisringform abweichende Querschnittsgeometrie des inneren Mantelbereichs, nämlich eine Kontur mit einer so genannten "Vierfach-D-Form". Hierbei zeigt die Kontaktfläche 6 vier gebogene Längenabschnitte 10, einen in jedem Quadranten, die durch gerade oder leicht nach innen gekrümmte Längenabschnitte 11 miteinander verbunden sind. Diese Mantelstruktur hat eine vierzählige Symmetrie.

Bei den anhand den Figuren 1 bis 4 beschriebenen Ausführungsformen besteht der innere Mantelbereich 4 jeweils aus undotiertem Quarzglas und der äußere Mantelbereich 5 aus einem mit Fluor dotierten Quarzglas mit einem gegenüber dem inneren Mantelbereich 4 abgesenkten Brechungsindex.

Bei der im Querschnittsdarstellung von **Figur 5** ist erkennbar, dass seitlich versetzt zur Innenbohrung 7 und beiderseits zur Mittelachse 17 zwei zusätzliche Bohrungen 28 im Mantelbereich vorgesehen sind. Diese dienen zur Aufnahme sogenannter "Stressstäbe", für die Herstellung einer Vorform für polarisationserhaltende optische Fasern.

Bei der in **Figur 6** gezeigten Ausführungsform sind im Mantelbereich 4 sechs zusätzliche Bohrungen 30 vorgesehen, die gleichmäßig um die Innenbohrung 7 und die Mittelachse 17 verteilt sind. Diese dienen beispielsweise zur Aufnahme von laseraktivem Quarzglas.

Die in **Figur 7** schematisch dargestellte Ausführungsform eines Mantelrohres mit nicht-runder Kontaktfläche unterscheidet sich von derjenigen der Figur 2 dadurch, dass dem äußeren Mantelbereich 5 nach außen noch zwei weitere Mantelschichten folgen. Es sind jeweils zwei Mantelbereiche 4, 14 aus undotiertem Quarzglas und zwei Mantelbereiche 5, 15 aus Fluor-dotiertem Quarzglas vorgesehen, wobei sich Bereiche aus undotiertem und dotiertem Quarzglas in radialer Richtung von innen nach außen abwechseln. Die Mantelbereiche 4, 14 aus undotiertem Quarzglas haben jeweils eine im Querschnitt kreisrunde Innenbegrenzung und eine oktogonale Außenbegrenzung, und bei den Mantelbereiche 5, 15 aus Fluordotiertem Quarzglas ist es genau umgekehrt. Dadurch sind zwei der Kontaktflächen 6, 16, 26 sind im Querschnitt oktogonal (6, 26), die andere ist kreisrund (16).

**Figur 8** zeigt schematisch eine Ausführungsform des erfindungsgemäßen Mantelrohres mit nicht-runder Kontaktfläche, bei dem der an die Innenbohrung 7 angrenzende, innerste Mantelbereich 18 eine kreisrunde Kontaktfläche 19 zum nächsten Mantelbereich 4 hat. Der Mantelbereich 4 stellt hier den "inneren Mantelbereich" im Sinne der Erfindung dar, denn er verfügt über die nicht-kreisrunde Kontaktfläche 6 zum nach außen angrenzenden äußeren Mantelbereich 5. Der an die Innenbohrung 7 angrenzende, innerste Mantelbereich 18 besteht aus Quarzglas, das durch Dotierung mit Germaniumoxid einen Brechungsindex hat, der demjenigen im äußeren Bereich des in die Innenbohrung einzusetzenden Kernstabs (in der Figur nicht dargestellt) angepasst ist. Diese Ausführungsform kann als "Pedestal-Design" bezeichnet werden.

Beim Einsatz des Mantelrohres mit nicht-runder Kontaktfläche als Pumplichtmantel für einen mantelgepumpten Laser reduzieren die von der Kreisgeometrie abweichenden Konturen der Kontaktfläche 6, 26 innerhalb der Rohrwandung die Ausbildung unerwünschter Helixmoden. Die Effizienz des Pumplichts wird so verbessert. Dadurch, dass diese Konturen in einem Quarzglasrohr mit kreisrunder Innenbohrung bereitgestellt werden, das als Quarzglasrohr für die Bauteilfertigung eingesetzt werden kann, nämlich als Überfangrohr zum Überfangen eines kreisrunden Kernstabs wird der Fertigungsprozess vereinfacht und das Risiko von Materialverlusten vermindert.

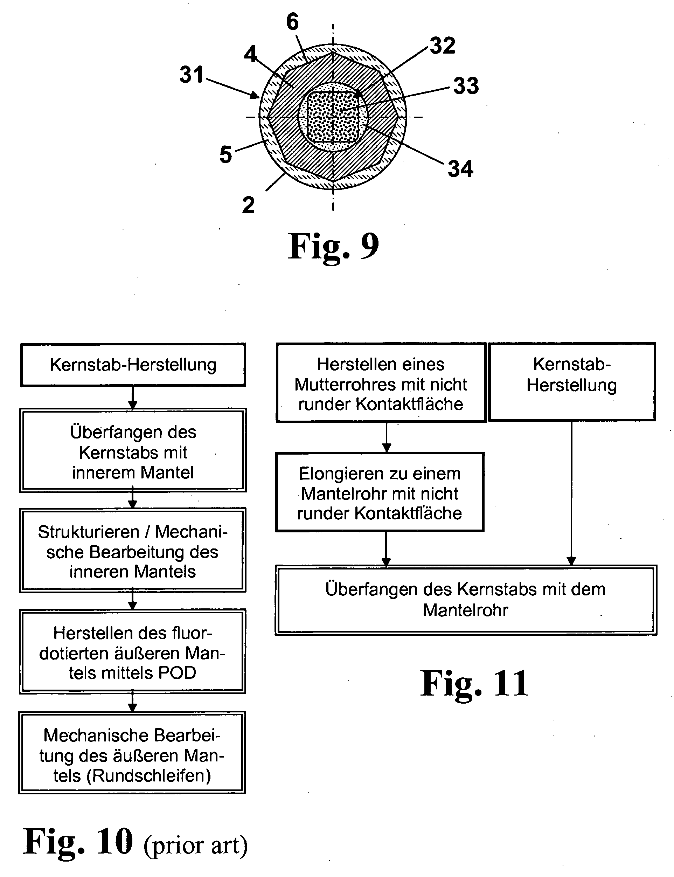

Die in **Figur 9** im Querschnitt schematisch dargestellte Vorform ist unter Einsatz eines Mantelrohres 31 mit nicht runder Kontaktfläche hergestellt. Vom Mantelrohr 31 wird der äußere Mantelbereich 5 aus fluordotiertem Quarzglas und der innere Mantelbereich 4 aus undotiertem Quarzglas bereitgestellt. Die Mantelbereiche 4 und 5 umgeben einen Kernstab 32, der sich aus einer zentralen Kernzone 33 mit quadratischem Querschnitt und aus einer Mantelschicht 34 zusammensetzt. Die Mantelschicht 34 umgibt die im Querschnitt quadratische Kernzone 33 derart, dass im Querschnitt ein Rundprofil erhalten wird, dessen Außendurchmesser an den Durchmesser der Innenbohrung des Mantelrohres 31 angepasst ist. Die Kernzone 33 besteht aus Quarzglas, das mit laseraktiven Substanzen dotiert ist. Die Mantelzone 34 besteht aus undotiertem Quarzglas.

Zur Herstellung der Vorform wird auf einem Stab mit quadratischer Querschnittsfläche, der aus laseraktivem Quarzglas besteht mittels POD-Abscheideverfahren eine Mantelglasschicht aus undotiertem Quarzglas erzeugt und diese Mantelglasschicht rund geschliffen. Der so erhaltene Kernstab 32 wird mit dem Mantelrohr 31 unter Bildung der Vorform überfangen.

Aus der Vorform wird eine Laserfaser gezogen, die sich durch ein quadratisches Strahlprofil auszeichnet.

Im Folgenden wird die Herstellung des Mantelrohres mit nicht-runder Kontaktfläche anhand Figur 1 näher erläutert.

Ein dickwandiger Hohlzylinder aus undotiertem Quarzglas mit einem Innendurchmesser von 10 mm und einem Außendurchmesser von 100 mm wird bereitgestellt. Durch Abschleifen erhält die Außenmantelfläche eine oktogonale Form. Nach der mechanischen Bearbeitung wird die Quarzglasoberfläche mit Flusssäure geätzt und mit Ethanol gereinigt, um Schleifrückstände zu entfernen. Anschließend wird die bearbeitete Oberfläche durch Heißpolitur verglast und versiegelt.

Der so erhaltene Quarzglaszylinder mit oktogonaler Querschnittsfläche wird mittels Plasma-Außenabscheideverfahren (POD-Verfahren) mit einer äußeren Mantelschicht aus einem mit Fluor dotierten Quarzglas versehen.

Die Außenkontur der dabei abgeschiedenen Quarzglasschicht nimmt im Wesentlichen die achteckige Form des Quarzglaszylinders an. Um eine runde Rohrgeometrie zu erreichen, wird die äußere Mantelglasschicht rund geschliffen und anschließend mittels Flusssäure gereinigt, um Schleifspuren zu entfernen, und die geschliffene Oberfläche feuerpoliert, um sie zu versiegeln.

Die Innenwandung des so erhaltenen Quarzglasrohres wird einem Heißgasätzprozess unter Einsatz von SF₆ unterzogen, um die Oberfläche zu reinigen.

Das so erhaltene Mutterrohr wird in einem Ziehprozess mit einem Ausziehverhältnis von 30 werkzeugfrei auf einen Außendurchmesser von 20 mm elongiert. Während des Elongierprozesses wird die Innenbohrung des Mutterrohres beziehungsweise des abgezogenen Rohrstrangs mit Stickstoff gespült. Dabei wird die Qualität der Innenoberfläche weiter verbessert und es werden mehrere strukturierte Mantelrohre aus einer Charge hergestellt, was die Herstellkosten senkt.

Nach dem Schleifprozess weist das Mutterrohr eine geometrische exakte Polygonform auf. Beim Ätzen und insbesondere durch den Elongierprozess kann es zu einer gewissen Abrundung der Ecken des Polygons kommen. Darüber hinaus wird das Quarzglas des Mutterrohres beim Elongierprozess erweicht, so dass auch die geraden Flächen des Polygons verformt werden und je nach Ziehbedingungen im fertigen Quarzglasrohr nach innen oder nach außen gewölbt sein können.

Bei einer Abwandlung dieser Verfahrensweise wird als Ausgangsmaterial anstelle des Rohres ein Vollzylinder aus undotiertem Quarzglas eingesetzt. Nach dem Abschleifen und dem POD-Abscheideprozess durch Kernbohren wird eine mittige Innenbohrung im Vollzylinder erzeugt. Bei dieser Variante ist eine besonders exakte Konzentrizität von Kernloch und Mittelachse einfacher realisierbar.

Durch die Unterteilung der Fertigungsschritte der Vorform in Mantelrohr-Herstellung einerseits und Kernstab-Herstellung andererseits werden die Komponenten erst im letzten Schritt - dem Überfangschritt - zur Vorform zusammengeführt. Dadurch ist die Anzahl der Prozessschritte reduziert, in denen der Kernstab involviert ist, und das Risiko sinkt, dass der Kernstab zerstört wird. Dies verdeutlicht auch der Vergleich der Fließdiagramme von **Figur 10** und **Figur 11****,** die die Verfahrensschritte zur Herstellung einer Vorform benennen, in denen der Kernstab involviert ist (gegebenenfalls ist der Rahmen mit Doppel-Linien gekennzeichnet). Figur 10 nennt die dazu beim bekannten eingangs zitierten Verfahren erforderlichen Verfahrensschritte, und Figur 11 den beim erfindungsgemäßen Verfahren erforderlichen einzigen Verfahrensschritt, nämlich das Überfangen des Kernstabs.

Alternativ dazu kann das Überfangen des Kernstabs mit dem erfindungsgemäßen Quarzglasrohr kann auch beim Faserziehprozess erfolgen, indem ein Ensemble aus dem Mantelrohr und dem Kernstab einer Heizzone zugeführt, darin bereichsweise erweicht und dabei verschmolzen und unmittelbar zur Faser gezogen wird.

Der Einsatz des Mantelrohres mit nicht-runder Kontaktfläche ist insbesondere bei besonders teuren Kernstäben oder bei solchen zu empfehlen, die mechanisch, thermisch oder gegenüber UV-Strahlung besonders empfindlich sind. Durch die Herstellung einer großen strukturierten Mantelrohr-Charge in einem einzigen Elongierprozess können die Kosten pro Einheit gesenkt werden. Außerdem ist die Herstellung mehrerer Vorformen in gleichbleibender Qualität einfacher, da bei der Einzelherstellung auftretende Prozessschwankungen entfallen. Darüber hinaus kann ein großes Mantelrohr mit mehreren unterschiedlichen Kernmaterialien bestückt und auf diese Weise einfacher getestet und qualifiziert werden. Dies hilft insbesondere bei der Entwicklung neuer Kernmaterialien Zeit und Kosten einzusparen.

## Patentansprüche

1. Quarzglasrohr als Halbzeug für ein optisches Bauteil, das eine sich entlang einer Rohr-Mittelachse (17) erstreckende Innenbohrung zur Aufnahme eines Kernstabs und eine von einer Innenmantelfläche (1) und einer Außenmantelfläche (2) begrenzte Rohrwandung (3) aufweist, in der ein innerer Bereich (4) aus einem ersten Quarzglas und ein den inneren Bereich (4) umgebender äußerer Bereich (5) aus einem zweiten Quarzglas an einer Kontaktfläche (6) aneinander liegen, die um die Mittelachse (17) verläuft, wobei sich die Brechungsindizes von ersten und zweitem Quarzglas unterscheiden, **dadurch gekennzeichnet, dass** die Kontaktfläche (6) im radialen Querschnitt einen nichtrunden Verlauf und die Innenmantelfläche (1) einen kreisrunden Verlauf zeigen.

2. Quarzglasrohr nach Anspruch 1, **dadurch gekennzeichnet, dass** die Kontaktfläche (6) im radialen Querschnitt mindestens eine Ecke aufweist.

3. Quarzglasrohr nach Anspruch 1 oder 2, **dadurch gekennzeichnet, dass** die Kontaktfläche (6) im radialen Querschnitt einen polygonalen Verlauf zeigt.

4. Quarzglasrohr nach Anspruch 1 oder 2, **dadurch gekennzeichnet, dass** die Kontaktfläche (6) im radialen Querschnitt einen Verlauf mit abwechselnd geraden und gekrümmten Längenabschnitten (10; 11) oder mit abwechselnd links und rechts gekrümmten Längenabschnitten zeigt.

5. Quarzglasrohr nach einem der vorhergehenden Ansprüche, **dadurch gekennzeichnet, dass** die Kontaktfläche (6) zwischen innerem Bereich (4) und äußerem Bereich (5) eine erste Kontaktfläche ist, die innerhalb der Rohrwandung (3) von einer zweiten Kontaktfläche (26) umgeben ist, wobei auch die zweite Kontaktfläche (26) Bereiche (14; 15) aus Quarzglas mit unterschiedlichen Brechungsindizes begrenzt und einen im radialen Querschnitt nicht-kreisrunden Verlauf aufweist.

6. Quarzglasrohr nach einem der vorhergehenden Ansprüche, **dadurch gekennzeichnet, dass** die Außenmantelfläche (2) einen kreisrunden Verlauf zeigt.

7. Quarzglasrohr nach einem der vorhergehenden Ansprüche, **dadurch gekennzeichnet, dass** die Innenbohrung (7) konzentrisch zur Mittelachse (17) verläuft.

8. Quarzglasrohr nach einem der vorhergehenden Ansprüche, **dadurch gekennzeichnet, dass** das Quarzglas des äußeren Bereichs (5) mit Fluor dotiert ist.

9. Quarzglasrohr nach einem der vorhergehenden Ansprüche, **dadurch gekennzeichnet, dass** der innere Bereich (4) aus undotiertem Quarzglas besteht.

10. Quarzglasrohr nach einem der vorhergehenden Ansprüche, **dadurch gekennzeichnet, dass** die Rohrwandung (3) eine Innenschicht (18) aufweist, die sich zwischen Innenbohrung (7) und innerem Bereich (4) erstreckt, und die aus Quarzglas besteht, das einen höheren Brechungsindex als undotiertes Quarzglas aufweist.

11. Verfahren zur Herstellung des Quarzglasrohres nach einem der Ansprüche 1 bis 10, **dadurch gekennzeichnet, dass** ein Mutterrohr aus Quarzglas erzeugt wird, das eine Rohrwandung (3) hat, innerhalb der an einer radial umlaufenden, im Querschnitt nicht kreisrunden Kontaktfläche (6) ein innerer Bereich (4) aus einem ersten Quarzglas und ein diesen umgebender äußerer Bereich (5) aus einem zweiten Quarzglas aneinander liegen, wobei sich die Brechungsindizes von ersten und zweitem Quarzglas unterscheiden, und wobei das Mutterrohr zu einem Quarzglasrohr-Strang werkzeugfrei elongiert und daraus Teilstücke abgelängt werden.

12. Verfahren nach Anspruch 11, **dadurch gekennzeichnet, dass** beim Elongierprozess ein Ausziehverhältnis im Bereich von 3 bis 100, bevorzugt weniger als 40 eingestellt wird.

13. Verfahren nach einem der Ansprüche 11 oder 12, **dadurch gekennzeichnet, dass** die Innenbohrung des Mutterrohres beim Elongierprozess mit einem Spülgas gespült wird.

## Claims

1. A quartz glass tube as a semi-finished product for an optical component, comprising an inner bore extending along a tube center axis (17) for accommodating a core rod and a tube wall (3) with an inner cladding surface (1) and an outer cladding surface (2), said wall comprising an inner region (4) of a first quartz glass and an outer region (5) of a second quartz glass surrounding the inner region (4), wherein said inner region and said outer region are adjacent to each other on a contact surface (6) which extends around the center axis (17), wherein said first quartz glass and said second quartz glass having refractive indices that differ from each other, **characterized in that** in a radial cross-section the contact surface (6) has a non-round profile and the inner cladding surface (1) has a circular profile.

2. The quartz glass tube according to claim 1, **characterized in that** the contact surface (6) in the radial cross-section has at least one corner.

3. The quartz glass tube according to claim 1 or 2, **characterized in that** the contact surface (6) in the radial cross-section has a polygonal profile.

4. The quartz glass tube according to claim 1 or 2, **characterized in that** the contact surface (6) in the radial cross-section has a profile with alternatingly straight and curved longitudinal sections (10; 11) or with longitudinal sections alternatingly curved to the left and right sides thereof.

5. The quartz glass tube according to any one of the preceding claims, **characterized in that** the contact surface (6) between the inner region (4) and the outer region (5) is a first contact surface surrounded within the tube wall (3) by a second contact surface (26), the second contact surface (26) also defining regions (14; 15) of quartz glass with different refractive indices and having a profile that is non-circular in the radial cross-section.

6. The quartz glass tube according to any one of the preceding claims, **characterized in that** the outer cladding surface (2) has a circular profile.

7. The quartz glass tube according to any one of the preceding claims, **characterized in that** the inner bore (7) extends concentrically relative to the center axis (17).

8. The quartz glass tube according to any one of the preceding claims, **characterized in that** the quartz glass of the outer region (5) is doped with fluorine.

9. The quartz glass tube according to any one of the preceding claims, **characterized in that** the inner region (4) consists of undoped quartz glass.

10. The quartz glass tube according to any one of the preceding claims, **characterized in that** the tube wall (3) comprises an inner layer (28) which extends between inner bore (7) and inner region (4) and that consists of quartz glass having a higher refractive index than undoped quartz glass.

11. A method for producing the quartz glass tube according to any one of claims 1 to 10, **characterized in that** a mother tube of quartz glass is produced that has a tube wall (3) comprising an inner region (4) of a first quartz glass and an outer region (5) of a second quartz glass surrounding said inner region, wherein said inner region and said outer region are adjacent to each other on a radially extending contact surface (6) that is non-circular in cross section, wherein said first quartz glass and said second quartz glass having respective refractive indices that are different from each other, and the mother tube being elongated into a quartz glass strand without any tool and cutting sections therefrom to length.

12. The method according to claim 11, **characterized in that** in the elongation process a draw ratio is set in the range of 3 to 100, preferably of less than 40.

13. The method according to any one of claims 11 or 12, **characterized in that** the inner bore of the mother tube is flushed with a flushing gas in the elongation process.

## Revendications

1. Tube en verre quartz en tant que produit semi-fini pour un composant optique qui présente un perçage interne s'étendant le long d'un axe médian tubulaire (17) pour le logement d'une barre centrale et une paroi tubulaire (3) limitée par une surface interne d'enveloppe (1) et une surface externe d'enveloppe (2), dans laquelle une zone interne (4) en premier verre de quartz et une zone externe (5) en second verre de quartz entourant la zone interne (4) sont appliquées l'une à l'autre contre une surface de contact (6), qui s'étend autour de l'axe médian (17), les indices de réfraction du premier quartz et du second quartz étant différents, **caractérisé en ce que** la surface de contact (6) présente une courbe non circulaire en coupe radiale et la surface interne d'enveloppe (1) une courbe circulaire.

2. Tube en verre de quartz selon la revendication 1, **caractérisé en ce que** la surface de contact (6) présente un angle en coupe transversale radiale.

3. Tube en verre de quartz selon la revendication 1 ou 2, **caractérisé en ce que** la surface de contact (6) présente en coupe transversale radiale une courbe polygonale.

4. Tube en verre de quartz selon la revendication 1 ou 2, **caractérisé en ce que** la surface de contact (6) présente en coupe transversale radiale une courbe avec en alternance des sections longitudinales droites et courbées (10 ; 11) ou des sections longitudinales courbées en alternance à gauche et à droite.

5. Tube en verre de quartz selon l'une des revendications précédentes, **caractérisé en ce que** la surface de contact (6) est une première surface de contact entre la zone interne (4) et la zone externe (5), qui est entourée à l'intérieur de la paroi tubulaire (3) d'une seconde surface de contact (26), la seconde surface de contact (26) limitant des zones (14; 15) en verre de quartz avec des indices de réfraction différents et présente une courbe non circulaire en coupe transversale radiale.

6. Tube en verre de quartz selon l'une des revendications précédentes, **caractérisé en ce que** la surface externe d'enveloppe (2) présente une courbe circulaire.

7. Tube en verre de quartz selon l'une des revendications précédentes, **caractérisé en ce que** le perçage interne (7) s'étend concentriquement par rapport à l'axe médian (17).

8. Tube en verre de quartz selon l'une des revendications précédentes, **caractérisé en ce que** le verre de quartz de la zone externe (5) est dopé au fluor.

9. Tube en verre de quartz selon l'une des revendications précédentes, **caractérisé en ce que** la zone interne (4) se compose de verre de quartz non dopé.

10. Tube en verre de quartz selon l'une des revendications précédentes, **caractérisé en ce que** la paroi tubulaire (3) présente une couche interne (18) qui s'étend entre le perçage interne (7) et la zone interne (4), et qui se compose de verre de quartz présentant un indice de réfraction plus élevé que le verre de quartz non dopé.

11. Procédé pour la fabrication du tube en verre de quartz selon l'une des revendications 1 à 10, **caractérisé en ce qu'**un tube mère en verre de quartz est fabriqué, lequel a une paroi tubulaire (3), qu'une zone interne (4) en premier verre de quartz et une zone externe (5) en second verre de quartz entourant la première s'applique l'une contre l'autre à l'intérieur de la surface de contact (6) non circulaire en couple transversale s'étendant radialement, les indices de réfraction des premier et second verres de quartz étant différents et le tube mère étant allongé sans outil en un tube de verre de quartz dont des tronçons en sont découpés.

12. Procédé selon la revendication 11, **caractérisé en ce que** pendant le processus d'allongement, un rapport de tirage est réglé entre 3 et 100, de préférence inférieur à 40.

13. Procédé selon l'une des revendications 11 ou 12, **caractérisé en ce que** le perçage interne du tube mère est nettoyé par un gaz de purge pendant le processus d'allongement.
